# EUROPEAN PATENT SPECIFICATION

(11) **EP 2 576 864 B1**
(45) Date of publication and mention of the grant of the patent: **24.01.2018**
(21) Application number: 11791655.1
(22) Date of filing: 06.05.2011
(51) Int. Cl.: C23C 24/10, B05D 7/00, B05D 3/02, C03C 8/18, C04B 35/581, C23D 5/00, C23D 5/04

(54) **NANO-COATING THERMAL BARRIER AND METHOD FOR MAKING THE SAME**
NANOSTRUKTURIERTE WÄRMEDAMSCHICHT UND VERFAHREN ZUM HERSTELLEN
BARRIÈRE THERMIQUE À NANOREVÊTEMENT ET PROCÉDÉ POUR SA FABRICATION

(30) Priority: 07.06.2010 US 795011
(43) Date of publication of application: 10.04.2013
(60) Divisional application: 17193749.3
(73) Proprietor: The Boeing Company, Chicago, IL 60606-1596 (US)
(72) Inventor: RUSSELL, James C., Bellevue Washington 98006 (US); WHITE, Tresha L., Seattle Washington 98121 (US); SHIFLETT, Bryan, Bonney Lake Washington 98391 (US); CHERINET, Pazion, Seattle Washington 98133 (US); WADLEY, Scott, Renton Washington 98056 (US); BARNHART, Carol, Tukwila Washington 98168 (US); KHOZIKOV, Vyacheslav, Bellevue Washington 98006 (US); NAKAMOTO, Kyle, Bellevue Washington 98006 (US)
(74) Representative: Witte, Weller & Partner Patentanwälte mbB
(86) International application number: PCT/US2011/035612
(87) International publication number: WO 2012/021188

(56) References cited:
- EP-A1- 1 844 863
- WO-A1-2008/031371
- WO-A2-2008/060699
- US-A- 4 555 415
- COSTESCU R M ET AL: "Ultra-low thermal conductivity in W/Al2O3 nanolaminates", SCIENCE, AMERICAN ASSOCIATION FOR THE ADVANCEMENT OF SCIENCE, WASHINGTON, DC; US, vol. 303, no. 5660, 13 February 2004 (2004-02-13), pages 989-990, XP002535913, ISSN: 0036-8075, DOI: 10.1126/SCIENCE.1093711
- KIM ET AL: "Nanostructuring expands thermal limits", NANO TODAY, ELSEVIER, AMSTERDAM, NL, vol. 2, no. 1, 1 February 2007 (2007-02-01), pages 40-47, XP005929429, ISSN: 1748-0132, DOI: 10.1016/S1748-0132(07)70018-X
- MAENOSONO ET AL: "Overview of nanoparticle array formation by wet coating", JOURNAL OF NANOPARTICLE RESEARCH, KLUWER ACADEMIC PUBLISHERS, DORDRECHT, NL, vol. 5, 1 January 2003 (2003-01-01), pages 5-15, XP002351024, ISSN: 1388-0764, DOI: 10.1023/A:1024418931756

## Description

### TECHNICAL FIELD

This disclosure generally relates to techniques for controlling thermal energy transfer through materials, and deals more particularly with a thermal barrier coating and method of making the coating.

### BACKGROUND

EP 1 844 463 A1 discloses an article having a surface with low wettability and a corresponding method of making such an article. The article comprises a surface disposed on a substrate, wherein the surface comprises a material having a nominal wettability sufficient to generate, with water, a nominal contact angle in a range from about 60° to about 90°, the material comprising at least one material selected from the group consisting of a polymer and a ceramic; and a texture comprising a plurality of features; wherein the surface has an effective wettability sufficient to generate, with water, a contact angle in a range from about 120° to about 180°.

WO 2008/060699 A2 discloses nano-particle ceramic coatings which may include nano-particles, wherein the nano-particles may be metal nano-particles. The coating may be applied to a substrate, wherein the nano-particles of the ceramic coating are diffused into pores in the substrate to form a substrate coating interface comprising material from the substrate and nano-particles from the coating.

WO 2008/031371 A1 discloses a method for producing a particle having a functional layer, wherein nano-particles are introduced into the functional layer, wherein said nano-particles comprise a particle core and a particle shell surrounding the particle core. The material of the particle core has a higher chemical activity than the material of the particle shell. The material of the particle shell allows diffusion of the material of the particle core through the particle shell into the functional layer material.

Managing the flow of thermal energy through materials is important in a wide range of industries. Thermal energy flows through a material in the form of thermal quanta known as phonons. The flow of phonons through a material may be reduced by the use of insulation which presents a resistance to the phonon flow, resulting in a thermal differential or temperature gradient. However, the use of insulation to control thermal energy transfer may have limitationsin some applications. For example, in the aerospace industry, the use of insulation to reduce thermal energy transfer may add undesired weight to a vehicle or may result in parts that are too large or thick to meet application requirements.

Phonon flow through a material may also be reduced by providing the material with a reflective surface which reflects heat from the material before it can be absorbed. However, reliance on highly reflective surfaces to control thermal energy transfer may also be problematic in some applications, because of the need to maintain the reflective surface polished and/or mirror-like, which can add to operating costs.

More recently, it has been discovered that layered, two dimensional arrays of small metal particles can interfere with the flow of phonons, thereby reducing the flow of heat through these layers in a direction substantially normal to the layers. However, the use of layered two dimensional arrays of small metal particles to reduce heat flow through phenomena known as phonon interference has been largely limited to laboratory experimentation. Known layered two dimensional arrays may be time consuming and costly to produce, and may result in a surface that may not be sufficiently durable for high performance applications, such as those found in the aerospace industry.

Accordingly, there is a need for a coating that may be used as a thermal barrier to manage the flow of heat through a material using phonon interference, and which is durable and robust. There is also a need for a method of making the coating and applying it to a substrate which is both relatively economical and may be used to cover relatively large areas of a substrate surface.

### SUMMARY

The disclosed embodiments provide a thermal barrier coating that blocks or reduces the flow of heat using a composite structure comprising nano-scale materials having high and low thermal conductivities arranged in thin films or as an array of small particles held in a matrix. In one embodiment, the composite structure comprises a quasi-regular 3-D array of metal nano-spheres having a relatively high thermal conductivity embedded in a glassy enamel matrix having a relatively low thermal conductivity. Heat waves traveling through the coating encounter the discontinuities in thermal conductivity and are partially reflected at the internal interfaces between the matrix material and the nano-particles. The summation of partial reflections from a multitude of interfaces at the discontinuities results in an aggregate, substantially reflective material. In some cases, these internal reflections can be caused to interfere with each other on a quantum level. This interference results in a highly directional scattering property that acts to strongly limit the forward flow of heat, giving the material a very low thermal conductivity. In effect, the disclosed coating is internally "shiny" in the thermal energy band. When properly sized, the coating may exhibit as little as 2% of the thermal conductivity of the same matrix and nano-particles materials mixed together in a bulk alloy. Since the disclosed thermal barrier coating does not depend on surface properties to manage heat flow, it may be embedded inside or between elements or substrates.

The disclosed thermal barrier coating is light weight and relatively economical to apply over large areas of a substrate. The coating may be tailored to reduce thermal energy transport over a relatively wide range of temperatures, yet is highly durable and is suitable for use in high performance applications, such as those in the aerospace industry. In some applications, use of the disclosed thermal barrier coating may reduce the need for relatively expensive materials such as titanium that may be designed to withstand higher temperatures. In other applications, the coating may also be tailored for lower temperature applications suitable for use on composites such as graphite/epoxy composite materials. The disclosed thermal barrier coating produces phonon interference from any direction of thermal energy flow, in contrast to prior techniques where layered 2-D arrays may reject only tuned phonon frequencies perpendicular to those layers.

According to one disclosed embodiment, a coating is provided which is adapted to be applied to a substrate for managing the flow of heat traveling through the substrate. The coating comprises an array of metal nano-particles held in a glassy matrix material. The array may be a substantially quasi-regular 3-D. The nano-particles may comprise a metal and may be spherical in shape. The spacing of the nano-particles in the array may be substantially constant, and the molecular mass of the nano-particles is substantially greater than that of the matrix material. In one embodiment, the ratio of the molecular mass of the nano-particles particle materials to the molecular mass of the matrix material is greater than approximately 10. In other words, the metal spheres are made of heavy material such as tungsten, and the matrix is made of light material such as silicon. Other material choices may be made without loss of generality.

According to another disclosed embodiment, a coating is provided which is adapted to be applied to a substrate for managing the flow of heat traveling through the substrate. The coating comprises an array of nano-particles held in a matrix where the nano-particles have a thermal conductivity substantially greater than that of the matrix. The matrix may a glassy compound comprising one of fused quartz, soda lime glass, boro-silicate glass and alumino-silica glass. The glass matrix may be in the form of a ceramic such as aluminum oxynitride. The size of the nano-particles is substantially similar to the wavelength of the phonons transporting heat through the coating at a preselected temperature.

According to a further embodiment, a thermal barrier coating is provided. The coating comprises at least two layers each including an array of metal nano-particles held in a glassy matrix material. The layers have characteristics respectively tailored to reduce thermal transport in at least two ranges of temperatures. The characteristics may include at least one of the spacing between the nano-particles, the ratio of the masses of the nano-particles to the glassy matrix material, and the ratio of the elastic constants of the nano-particles to the glassy matrix material. The thermal barrier coating may further comprise a third layer including an array of metal nano-particles held in a glassy matrix material wherein the third layer has characteristics tailored to reduce thermal transport in a third temperature range different than the first and second temperature ranges.

According to still another embodiment, a thermal barrier coating is provided for an aircraft part. The coating comprises a glassy matrix, and a plurality of metal nano-particles held in the matrix. The nano-particles are arranged in a 3-D array and are spaced apart at substantially constant distances substantially equal to the wavelength of phonons transporting thermal energy through the coating.

According to a further embodiment, a method is provided of making a thermal barrier coating. The method comprises applying a glassy compound to metal nano-particles, and fusing the glassy compound into a glass matrix holding the nano-particles. The coating may be formed by spraying a glassy powder or coating with a sol-gel silica compound on the nano-particles. The method further comprises assembling the nano-particles into a quasi-regular 3-D array.

According to still another disclosed embodiment, a method is provided of forming a thermal barrier coating on a substrate. The method comprises coating metal nano-particles with a glassy compound and self assembling the coated nano-particles into a quasi-regular 3-D array. The method also includes applying the assembled nano-particles to the substrate and fusing the glassy compound coatings into a substantially homogeneous matrix.

In summary, according to one aspect of the invention there is provided a thermal barrier coating adapted to be applied to a substrate for managing the flow of heat traveling through the substrate, including an array of metal nano-particles held in a glassy matrix material, wherein the matrix comprises a glassy compound, wherein the array is a three dimensional array, and wherein the metal nano-particles are spaced apart from each other at distances substantially equal to the wavelength of phonons transporting thermal energy through the matrix.

Advantageously the thermal barrier coating wherein the array is substantially quasi-regular.

Advantageously the thermal barrier coating wherein the nano-particles are generally spherical.

Advantageously the thermal barrier coating wherein the nano-particles include one of: Tungsten, and Cobalt.

Advantageously the thermal barrier coating wherein the glassy matrix material includes one of: fused quartz, soda lime glass, boro-silicate glass, alumino-silica glass.

Advantageously the thermal barrier coating wherein: the fused quartz includes amorphous SiO₂, the soda lime glass includes SiO₂, Na₂O CaO, Al₂O₃, MgO, the boro-silicate glass includes B₂O₃, Na₂O K₂O, CaO, and the alumino-silica glass includes SiO₂, Na₂O CaO, Al₂O₃, MgO, the boro-silicate glass includes SiO₂, B₂O₃, Al₂O₃, Na₂O, MgO, and CaO.

Advantageously the thermal barrier coating wherein the glassy matrix material is a ceramic.

Advantageously the thermal barrier coating wherein the ceramic is aluminum oxynitride.

Advantageously the thermal barrier coating wherein the spacing between the nano-particles in the array is generally constant.

Advantageously the thermal barrier coating wherein the atomic mass of the nano-particles is substantially greater than that of the matrix material.

Advantageously the thermal barrier coating wherein the ratio of the atomic mass of the nano-particles to the mass of the matrix material is greater than approximately 10.

Advantageously the thermal barrier coating wherein the elastic constant of the nano-particles is substantially greater than that of the matrix material.

Advantageously the thermal barrier coating wherein the glassy matrix material is a glass enamel.

A coating adapted to be applied to a substrate for managing the flow of heat traveling through the substrate may be provided, including an array of nano-particles held in a matrix material, wherein the nano-particles have a thermal conductivity substantially greater than that of the matrix material.

Advantageously the coating wherein the array is a substantially regular three dimensional array.

Advantageously the coating wherein the matrix material is a glassy material.

Advantageously the coating wherein the nano-particles are generally in the shape of spheres.

Advantageously the coating wherein the nano-particles are selected from the group consisting of: Tungsten, and Cobalt.

Advantageously the coating wherein the glassy material includes one of: fused quartz, soda lime glass, boro-silicate glass, alumino-silica glass.

Advantageously the coating wherein: the fused quartz includes amorphous SiO₂, the soda lime glass includes SiO₂, Na₂O CaO, Al₂O₃, MgO, the boro-silicate glass includes B₂O₃, Na₂O K₂O, CaO, and the alumino-silica glass includes SiO₂, Na₂O CaO, Al₂O₃, MgO, the boro-silicate glass includes SiO₂, B₂O₃, Al₂O₃, Na₂O, MgO, and CaO.

Advantageously the coating wherein the glassy material is a ceramic.

Advantageously the coating wherein the ceramic is aluminum oxynitride.

Advantageously the coating wherein the spacing between the nano-particles in the array is generally constant.

Advantageously the coating wherein the ratio of the atomic mass of the nano-particles to the atomic mass of the matrix material is greater than approximately 10.

Advantageously the coating wherein the elastic constant of the nano-particles is substantially greater than that of the matrix material.

Advantageously the coating wherein the glassy material is a glass enamel.

Advantageously the coating wherein the distance between the nano-particles in the array is substantially equal to the wavelength of phonons transporting the heat through the coating.

A thermal barrier coating may be provided, including at least two layers each including an array of metal nano-particles held in a glass matrix, wherein the layers have characteristics respectively tailored to reduce thermal transport in two ranges of temperatures.

Advantageously the thermal barrier coating wherein the characteristics include at least one of: the spacing between the nano-particles in each of the of the arrays, the ratio of the masses of the nano-particles to the glass matrix in each of the arrays, and the ratio of the elastic constant of the nano-particles to the glass matrix in each of the arrays.

Advantageously the thermal barrier coating further comprising a third layer including an array of metal nano-particles held in a glass matrix, wherein the third layer has characteristics tailored to reduce thermal transport in a third temperature range different than the first and second temperature ranges.

Advantageously the thermal barrier coating wherein: each of the arrays is a is a three dimensional array and is quasi-regular, and the nano-particles in each of the arrays are generally spherical.

Advantageously the thermal barrier coating wherein the glass matrix in each of the layers includes one of: fused quartz, soda lime glass, boro-silicate glass, and alumino-silica glass.

A thermal barrier coating for an aircraft part may be provided, including a glassy enamel matrix; and a plurality of metal nano-particles held in the matrix, the nano-particles being arranged in a 3-D array and spaced apart at substantially constant distances substantially equal to the wavelength of phonons transporting thermal energy through the coating.

According to still another aspect of the invention there is provided a method of making the thermal barrier coating according to the present invention, including applying a glassy compound to metal nano-particles; arranging the nano-particles into a three dimensional array; and fusing the glassy compound into a glass matrix holding the nano-particles, wherein the metal nano-particles are spaced apart from each other at distances substantially equal to the wavelength of phonons transporting thermal energy through the matrix.

Advantageously the thermal barrier coating wherein applying the glassy compound performed by one of: spraying a glassy powder onto the nano-particles, and applying a sol-gel of a glassy powder onto the nano-particles.

Advantageously the thermal barrier coating further including selecting the range of temperatures over which the coating is designed to act as a thermal barrier, and selecting the size of the metal nano-particles based on the selected temperature range.

Advantageously the thermal barrier coating wherein fusing the glassy compound is performed by heating the glassy compound on the coated nano-particles to the melting temperature of the glassy compound.

Advantageously the thermal barrier coating wherein heating the glassy compound is performed by a laser.

Advantageously the thermal barrier coating further including assembling the nano-particles into a quasi-regular 3-D array.

A thermal barrier coating made by the method.

A method of forming a thermal barrier coating on a substrate may be provided, including coating metal nano-particles with a glassy compound; self-assembling the coated nano-particles into a quasi-regular 3-D array; applying the assembled nano-particles to the substrate; and, fusing the glassy compound coatings into a substantially homogeneous matrix.

Advantageously the method wherein the fusing is performed by heating the coated nano-particles to at least the melting point of the glassy compound.

Advantageously the method wherein the self assembling is performed by: forming a slurry by adding mixing a solvent with the coated nano-particles, and evaporating the solvent from the slurry.

Advantageously the method wherein applying the assembled nano-particles to the substrate is performed by applying the slurry to the substrate.

Advantageously the method further including selecting a range of temperatures within which the coating is to reduce the transport of thermal energy; and selecting characteristics of the nano-particles and the glassy compound based in the selected temperature range.

Advantageously the method further including substantially matching the spacing of the nano-particles in the 3-D array with the wavelength of phonons transporting thermal energy into the coating.

A method for managing the flow of heat traveling through a substrate may be provided, including applying a coating on the substrate, including assembling a 3-D array of metal particles in a matrix.

Advantageously the method further including at least partially blocking the flow of heat traveling through the substrate by using the metal particles to reflect thermal phonons passing through the coating.

Advantageously the method further including using the metal particles to reflect thermal phonons passing through the coating in substantially any direction.

Advantageously the method further including selecting metal particles and a matrix that have substantially different thermal conductivities and cause reflection of the phonons traveling through the coating.

Advantageously the method wherein selecting the metal particles includes selecting a size for the metal particles that is based on a temperature range within which the travel of the heat is to be controlled.

Advantageously the method wherein selecting the matrix includes substantially matching the coefficient of thermal expansion of the matrix to the coefficient of thermal expansion of the substrate.

Advantageously the method wherein assembling the metal particles in the 3-D array includes coating the metal particles with a glassy compound and melting the coating into a substantially homogeneous matrix.

Advantageously the method wherein assembling the metal particles into the 3-D array includes: applying a mixture of the metal particles and a matrix material on the substrate, and fusing the matrix material into a substantially homogeneous matrix holding the metal particles in the 3-D array.

Advantageously the method wherein fusing the matrix material is performed by heating the mixture to at least the melting point of the matrix material.

Advantageously the method wherein assembling the metal particles into the 3-D array includes spacing the particles apart from each other at distances that result in interference between phonons carrying heat through the coating.

A thermal barrier coating for an aerospace vehicle component may be provided, including a glassy compound matrix selected from the group consisting of -fused quartz, soda lime glass, boro-silicate glass, and alumino-silica glass. a quasi-regular 3-D array of spherically shaped metal nano-particles held in the matrix and selected from the group consisting of Tungsten and Cobalt, the metal nano-particles having a thermal conductivity substantially greater than that of the matrix and being spaced apart from each other a distance substantially equal to the wavelength of phonons transporting thermal energy through the matrix.

A method of forming a thermal barrier on a component of an aerospace vehicle may be provided, including selecting a temperature range within which the thermal barrier is to reduce the thermal energy transported to the component;

The disclosed embodiments satisfy the need for a low cost, durable, high performance thermal barrier coating useful in a wide range of applications for controlling the transport of thermal energy through a substrate.

### BRIEF DESCRIPTION OF THE ILLUSTRATIONS

FIG. 1 is an illustration of a sectional view of a substrate having a thermal barrier coating thereon according to the disclosed embodiments.
FIG. 2 is an illustration of a side view of an aircraft engine mounting arrangement including a heat shield having the thermal barrier coating applied thereto.
FIG. 3 is an illustration similar to FIG. 1 but showing the use of the thermal barrier coating to reduce the escape of thermal energy from a substrate.
FIG. 4 is an illustration of a sectional view showing the thermal barrier coating sandwiched between two substrates.
FIG. 5 is an illustration similar to FIG. 4 but showing two thermal barrier coatings sandwiched between three substrates for controlling the transport of thermal energy within two separate temperature ranges.
FIG. 6 is an illustration of a sectional view of a substrate having three, stacked thermal barrier coatings thereon for respectively controlling thermal energy transport in three differing temperature ranges.
FIG. 7 is an illustration of a perspective view of the thermal barrier coating in which metal nano-particles are arranged in a quasi-regular 3-D array.
FIG. 8 is an illustration of a plan view of coated nano-particles arranged in array prior to being fused into a substantially homogeneous glass enamel.
FIG. 9 is an illustration of a diagram useful in explaining the reduction of thermal energy transport by phonon interference.
FIG. 10 is an illustration of a sectional view of a substrate having a thermal barrier coating thereon, wherein the coating comprises layers of differently sized nano-particles for controlling thermal energy transport in three different temperature ranges.
FIG. 11 is an illustration of a flow diagram of a method of optimizing and applying the thermal barrier coating.
FIG. 12 is an illustration of a flow diagram of a method of managing the flow of heat traveling through a substrate.
FIG. 13 is an illustration of a flow diagram of aircraft production and service methodology.
FIG. 14 is an illustration of a block diagram of an aircraft.

### DETAILED DESCRIPTION

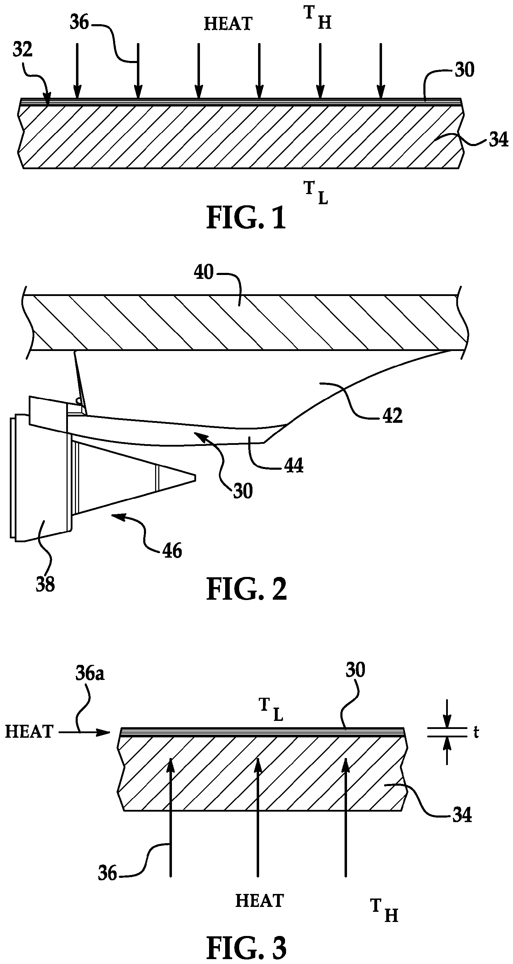

Referring to FIG. 1, the disclosed embodiments relate to a thermal barrier coating 30 that may be applied to a substrate 34 in order to control the transport of heat 36, also referred to herein as thermal energy, from an area of a higher temperature **T_{H}** to an area of a lower temperature **T_{L}**. In the example shown in FIG. 1, the thermal barrier coating 30 is designed to reduce the amount of heat 36 that reaches the substrate 34. As will be discussed below in more detail, the thermal barrier coating 30 may be a relatively thin, durable layer or layers of materials that reduce the transport of thermal energy 36 in the form of thermal quanta known as phonons by interfering with the phonon flow through the coating 30, thus forming a barrier that substantially reduces the thermal energy 36 transferred to the substrate 34. Phonons are quasi-particles characterized by quantization of the modes of lattice vibrations of periodic, elastic crystal structures of solids. Phonons may be viewed as wave packets having particle-like properties.

The disclosed thermal barrier coating 30 has a wide range of applications in various industries, such as, without limitation, the aerospace industry. For example, FIG. 2 illustrates an aerospace application of the coating 30. A jet engine 38 is mounted on an aircraft wing 40 by a pylon 42. A metal heat shield 44 protects the pylon 42 against overheating caused by hot exhaust gases exiting the engine 38 at 46. The thermal barrier coating 30 may be applied to the exterior surfaces of the heat shield 44 in order to reduce the amount of thermal energy reaching the heat shield 44. As a result of the thermal barrier provided by the coating 30, the heat shield 44 may be formed of lighter weight and/or less expensive materials that may not be capable of withstanding direct exposure to the hot exhaust temperatures produced by the engine 38. For example, and without limitation, in the absence of the thermal barrier coating 30, it may be necessary to employ a heat shield 44 made of titanium in order to withstand the hot exhaust gases from the engine 38. However, with the use of the thermal barrier coating 30, the heat shield 44 may be made of a less expensive and/or lighter material such as aluminum or a composite.

Other typical examples of aerospace applications of the coating 30 include, but are not limited to components located near an APU (auxiliary power unit), hot hydraulic components, engine nacelles, titanium nozzle surfaces, turbine blades and the walls of a combustion chamber, to name only a few. The thermal barrier coating 30 may be used in other industries, such as to maintain cryogenic cables (not shown) within a double walled vacuum system (not shown). The application of the coating 30 may reduce the need to maintain the vacuum, providing much lower cost of fabrication and operation.

FIG. 3 illustrates another example in which a thermal barrier coating 30 having a thickness ***t*** is used to limit the amount of thermal energy (heat) 36 that escapes from a substrate 34 to which the coating 30 is applied. In this example, the direction of the thermal energy transport is the opposite of that shown in the example of FIG. 1. In addition to reducing the flow of thermal energy 36 through the thickness ***t*** of the coating 30, the coating 30 is also effective in reducing the transport of thermal energy in the in-plane direction shown by the arrow 36a in FIG. 3 within the coating 30, and as well as in other directions.

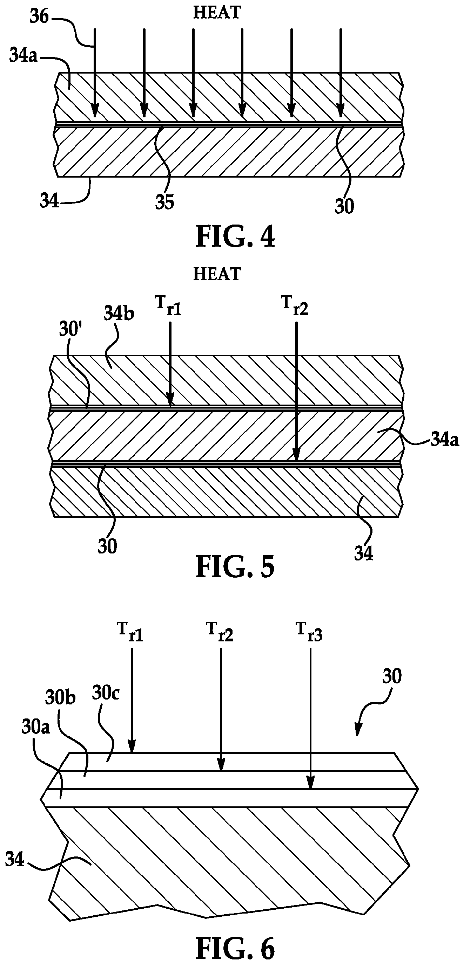

Referring to FIG. 4, the thermal barrier coating 30 may be used as an inner layer 35 that is sandwiched between two substrates 34, 34a, rather than as only a surface coating as shown in FIGS. 1 and 3. The substrates 34, 34a contacting the thermal barrier coating 30 may be any of various materials, including but not limited to metals and composites.

More than one thermal barrier coating 30 may be used to control the transport of thermal energy through one or more substrates 34. For example, as shown in FIG. 5, two thermal barrier coatings 30, 30' are respectively sandwiched between two outer substrates 34, 34b and a middle substrate 34a. Depending on the application, the two thermal barrier coatings 30, 30' may be substantially the same, or may have differing materials and/or characteristics that respectively are useful in controlling thermal energy transport in two different temperature ranges **Tᵣ₁**, **Tᵣ₂**.

FIG. 6 illustrates another embodiment of the thermal barrier coating 30. In this example, the coating 30 comprises three stacked layers 30a, 30b, 30c which may respectively employ differing materials and/or have differing characteristics which result in the layers 30a, 30b, 30c respectively controlling thermal energy transport through the coating 30 within different temperature ranges **Tᵣ₁**, **Tᵣ₂**, **Tr₃**.

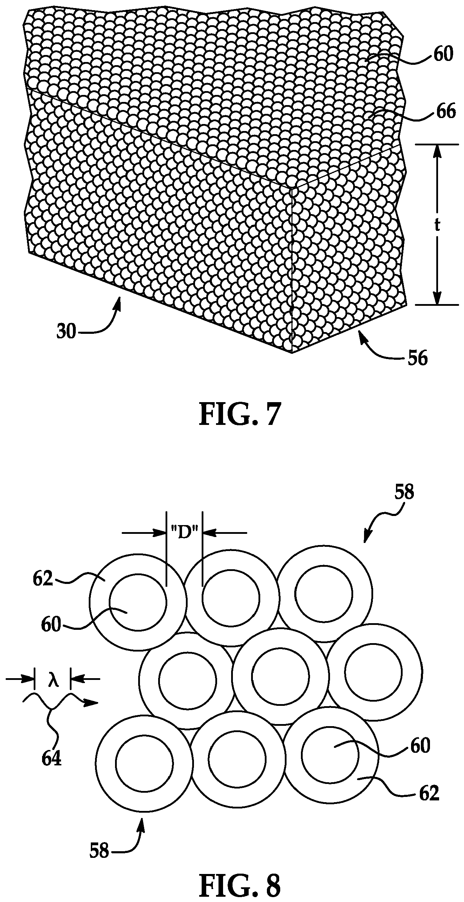

Referring now to FIGS. 7 and 8, the coating 30 comprises a quasi-regular 3-D (three-dimensional) array of individual nano-size particles 60 that are embedded and held in a matrix 66, which may comprise a silica-based compound. As used herein, "3-D array" and "quasi-regular 3-D array" mean a 3-D array in which the nano-particles 60 are generally arranged in a 3-D array and are spaced apart at generally constant distances ***D***, but wherein some irregularities may exist, such as, without limitation, gaps, inter-particle spacings that are not constant, missing nano-particles 60, etc.

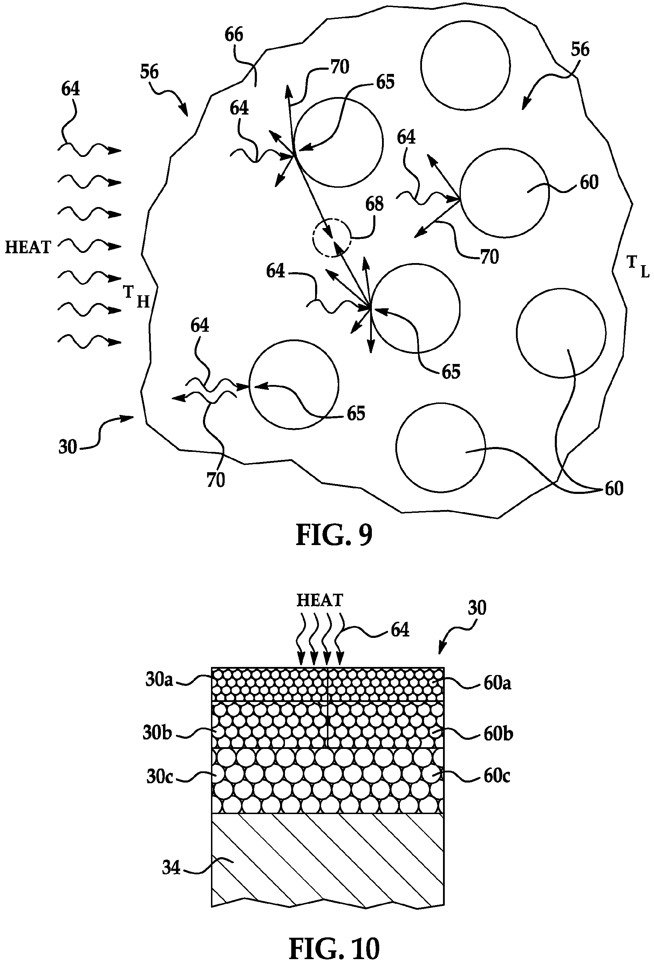

FIG. 8 shows coated nano-particles 58 in an intermediate stage of fabrication in which the individual nano-particles 60 have been coated with a layer of a glassy (silica-based) compound that form shells 62 around the nano-particles 60. The metal nano-particles 60 may comprise a metal such as Tungsten or Cobalt and may be spherical in shape, however other metals and geometric shapes may be possible. The size of the nano-particles 60, and the spacing ***D*** (FIG. 9) between them in the array 56 is dependent upon the wavelength *λ* of the phonons 64, which in turn may be determined by the temperature or range of temperatures in which the thermal barrier coating 30 is designed to be effective. The mean free path of phonons passing into the coating 30 is used to define the spacing nano-particle spacing ***D*** spacing in the array. The mean free path of a particle is the average distance it travels between successive impacts.

The materials that are selected for the supporting matrix 66 should exhibit phonon mean free path lengths at least as long as the phonon wavelength *λ* in order to prevent phonon scattering from material dislocations. The ratio of the atomic masses between the material used for the matrix 66 and for the nano-particles 60 should be as high as practical, and the mechanical compliance of the material of the matrix 66 may be optimized in order to achieve a large phonon capture ratio for the coating 30. In one practical embodiment, the ratio of the atomic masses of the nano-particles 60 and the matrix 66 is at least approximately 10.

The coating 30 may have a thickness ***t*** that is sufficient to provide tolerance for dislocations or errors in the self-assembly process. The compounds useful as the matrix 66 may be selected such that the coefficient of thermal expansion of the coating 30 is substantially matched to that of the substrate 34 to which it applied. The performance of the coating 30 may depend on the ratio of atomic masses, ratio of thermal conductivities, elastic constants and the geometry of the composite structure. The greater the difference between the two atomic masses in the super lattice, the more the super lattice acts as a phonon mirror, reflecting heat as long as a significant elastic constant difference exists between the matrix 66 and the nano-particles 60.

As used herein, "glass", "glassy", "glass compound", "glass compound" and "silica-based compound" refer to compounds containing silica. In one embodiment, the matrix 66 may comprise a glassy compound such as, without limitation, a ceramic, a fused quartz, soda lime glass, boro-silicate glass, alumino-silica glass, to name only a few. The fused quartz may include amorphous SiO₂, and the soda lime glass may include SiO₂, Na₂O, CaO, Al₂O₃ and MgO. The boro-silicate glass may include B₂O₃, Na₂O, K₂O and CaO. The alumino-silica glass may include SiO₂, Na₂O, CaO, Al₂O₃ and MgO. The boro-silicate glass may include SiO₂, B₂O₃, Al₂O₃, Na₂O, MgO and CaO. Fused quartz and fused silica are types of glass containing primarily silica in amorphous form. Soda-lime glass, also called soda-lime-silica glass, is the most prevalent type of glass and is commonly used for window glass and glass containers.

Well known and proven glass engineering techniques may be used to formulate a glassy enamel for use as the matrix 66. Suitable ceramics may comprise oxides, non-oxides and composites. Typical ceramics include aluminum oxinitride, silica glass fibers, and silica aerogel. These three types of ceramics may have an operating maximum safe working temperature of approximately 1150°F to 1200°F. A matrix 66 comprising a silica-based compound of the type mention mentioned above may be in the form of glass frit. When melted through the application of heat, the glass frit fuses into a vitreous, low-cost, durable enamel coating that exhibits good adhesion properties and bonds readily with surface metal oxides. The enamel coating may also have desirable quantum properties, and may be useful to over approximately 1400°F.

FIG. 9 illustrates a portion of an embedded 3-D array 56 of nano-particles 60 following a manufacturing step in which the exterior shells 62 (FIG. 8) have been fused into a substantially homogeneous glassy matrix 66. The flow of ballistic phonons 64 through the coating 30 is interrupted as the phonons 64 travel from hotter regions **T_{H}** to cooler regions **T_{L}** within the coating 30. This interruption is caused by a multitude of interfaces 65 between the host matrix 66 and the nano-particles 60 which respectively have significantly different thermal conductivities.

The phonons 64 encountering the nano-particles 60 are partially reflected as shown by the arrows 70. If the spacing of the nano-particles 60 is close to the wavelength *λ* of the phonons 64, the reflections 70 may interfere with each other. These interferences sum to produce an aggregate thermal reflection which reduces the thermal energy flow through the coating 30 and lowers its effective thermal conductivity. The difference in thermal conductivities of the matrix 66 and the particles 60 which result in interfering reflections 70 of the phonons 64 may be dependent on the mass ratio, effective matrix spring constant, phonon dispersion and scattering in the matrix over short path lengths, and relative period ordering of the nano-particles 60. It should be noted here that the 3-D spatial arrangement of the nano-particles 60, including the distance ***D*** (FIG. 8) selected for their spacing, results in the desired internal reflection of the phonons 64 regardless of the direction of flow of the phonons 64 through the coating 30.

FIG. 10 illustrates additional details of a multi-layer coating 30, similar to that described previously in connection with FIG. 6. In this example, each of the layers 30a, 30b and 30c comprises a quasi-regular 3-D array of nano-particles 60a, 60b and 60c embedded in a glassy matrix 66 (FIG. 9) wherein each layer 30a. 30b, 30c is separately "tuned" to a particular band gap that reduces thermal energy transport in a particular temperature range. Tuning of the layers 30a, 30b, 30c may include selecting combinations parameters of the 3-D array structure such as the period, particle size, mass ratio, elastic constant, scattering density, etc. For example, and without limitation, in one practical embodiment, in the case of the top layer 30a, a 10 to 20nm period or spacing of the nano-particles 60 may be required to tune the layer for reducing thermal energy transport in the temperature range of approximately 1000°F to 500°F. The middle layer 30b may require a nano-particle period of approximately 20nm to 50nm in order to tune it for a temperature range of approximately 500°F to 200°F, while the lowest layer 30c may require a nano-particle period of approximately 50nm to 100nm in order to tune it for a temperature range of approximately 250°F to 100°F.

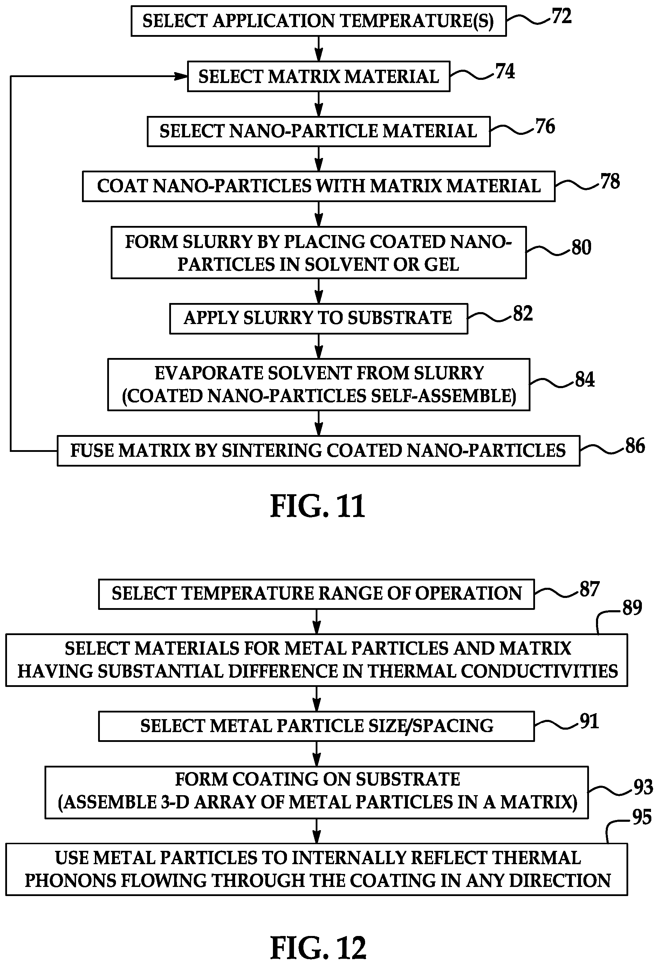

Attention is now directed to FIG. 11 which illustrates the overall steps of one embodiment of a method managing heat traveling through a substrate 34 using a thermal barrier coating 30, as well as a method of making the coating 30. Beginning at step 72, one or more temperatures or ranges of temperatures for a given application are selected. These selected temperatures are those in which the thermal barrier coating 30 is designed to manage thermal energy traveling through the substrate 34. Based on the temperatures selected at step 72, a matrix material is selected at step 74 and a nano-particle material is selected at step 76. The selections of the matrix material and nano-particle material in steps 74 and 76 are based at least in part on the temperature ranges that are selected at step 72. The matrix material and nano-particle material are selected in steps 74 and 76 such that they have substantially different thermal conductivities. The size of the metal nano-particles 60 is selected such that the resulting spacing D (FIG. 8) between the metal nano-particles 60 substantially matches the wavelength of phonons 64 carrying the heat through the substrate 34. The matrix material may be selected such that it has a coefficient of thermal expansion that substantially matches that of the substrate 34. Next, at 78, the selected nano-particles 60 are coated with the matrix material using any of various processes, including but not limited to spraying the matrix material onto the nano-particles 60. Next, at 80, a slurry may be formed by placing the coated nano-particles 58 (FIG. 8) in a solvent or gel (not shown) that causes the coated nano-particles 58 to self-assemble into a quasi-regular 3-D array. At step 82, the slurry is applied to the substrate 34 by any suitable technique, such as spraying the substrate 34 with the slurry or by dipping the substrate 34 in the slurry.

At step 84, the solvent or gel is evaporated from the slurry on the substrate 34, causing the coated nano-particles 58 to self-assemble into a quasi-regular 3-D array. As an alternative to self-assembly of the coated nano-particles 58 into the 3-D array by the solution technique described above, self-assembly may be achieved by electrostatically assisted dry deposition. Finally, at step 86, the shells 62 around the nano-particles 60 are fused together to form a substantially homogeneous matrix 66 by sintering the coated nano-particles 58. The sintering and fusion of the matrix material shells 62 may be may caused either by heating the coated nano-particles 58 in an oven to melt and fuse the glassy frit-like shells 62, or by using a laser to melt the shells 62 into an enamel surface that bonds to the substrate 34. The use of a laser to fuse the shells 62 allows lower processing temperatures which may permit the thermal barrier coating to be applied to composite structures (not shown), such as graphite/epoxy composites. The coating 30 may be applied to the substrate 34 by dipping, spraying or other suitable techniques.

FIG. 12 illustrates the steps of a method of managing the flow of heat traveling through a substrate using the thermal barrier coating 30 produced by the method previously described in connection with FIG. 11. Beginning at step 87, the temperature or range of temperatures is selected in which the thermal barrier coating 30 is to be effective. At 89, the material used for the metal particles 60 and the matrix 66 are selected. These two materials are selected so that they have a substantial difference in their thermal conductivities. At step 91, the size and spacing between the metal particles 60 in the 3-D array are selected such that they will intercept phonons 64 flowing through the coating 30 from substantially any direction. As previously mentioned, the spacing between the particles 60 is selected to be substantially equal the wavelength of the phonons at the selected range of temperatures so that the phonon reflections interfere. The coating 30 is formed on the substrate 34 at step 93, according the method of making and applying the coating 30 previously described. At 95, the particles 60 are used to internally reflect the phonons 64 flowing through the coating 30 from substantially any direction, thereby reducing the transport of thermal energy though the substrate 34.

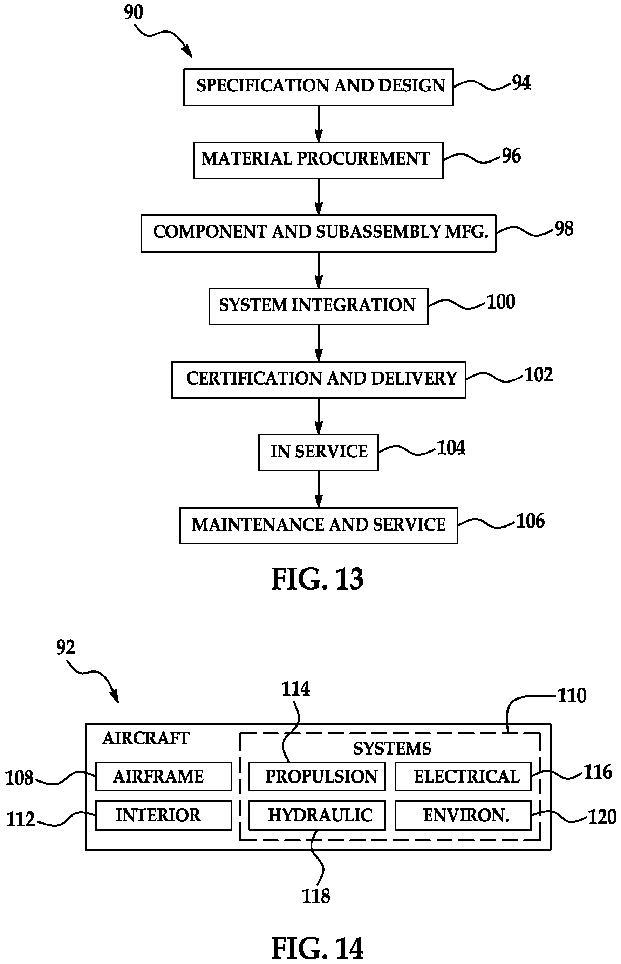

Embodiments of the disclosure may find use in a variety of potential applications, particularly in the transportation industry, including for example, aerospace, marine and automotive applications. Thus, referring now to FIGS. 13 and 14, embodiments of the disclosure may be used in the context of an aircraft manufacturing and service method 90 as shown in Figure 13 and an aircraft 92 as shown in Figure 14. Aircraft applications of the disclosed embodiments may include, for example, a wide variety of structural and non-structural parts and components that may require protection from high temperatures. During pre-production, exemplary method 90 may include specification and design 94 of the aircraft 92 and material procurement 96. During production, component and subassembly manufacturing 98 and system integration 100 of the aircraft 92 takes place. Thereafter, the aircraft 92 may go through certification and delivery 102 in order to be placed in service 104. While in service by a customer, the aircraft 92 is scheduled for routine maintenance and service 106 (which may also include modification, reconfiguration, refurbishment, and so on).

Each of the processes of method 90 may be performed or carried out by a system integrator, a third party, and/or an operator (e.g., a customer). For the purposes of this description, a system integrator may include without limitation any number of aircraft manufacturers and major-system subcontractors; a third party may include without limitation any number of vendors, subcontractors, and suppliers; and an operator may be an airline, leasing company, military entity, service organization, and so on.

As shown in FIG. 14, the aircraft 92 produced by exemplary method 90 may include an airframe 108 with a plurality of systems 110 and an interior 112. Examples of high-level systems 110 include one or more of a propulsion system 114, an electrical system 116, a hydraulic system 118, and an environmental system 120. Any number of other systems may be included. The disclosed coating may be applied to parts and components used in the interior 112, in the airframe 108 or in any of the systems 110. Although an aerospace example is shown, the principles of the disclosure may be applied to a wide range of other industries, including but not limited to the marine and automotive industries as well as to energy systems and energy distribution.

Systems and methods embodied herein may be employed during any one or more of the stages of the production and service method 90. For example, parts, structures and components corresponding to production process 198 may be fabricated or manufactured in a manner similar to parts, structures and components produced while the aircraft 92 is in service. Also, one or more apparatus embodiments, method embodiments, or a combination thereof may be utilized during the production stages 98 and 100, for example, by substantially expediting assembly of or reducing the cost of an aircraft 92. Similarly, one or more of apparatus embodiments, method embodiments, or a combination thereof may be utilized while the aircraft 92 is in service, for example and without limitation, to maintenance and service 106.

Although the embodiments of this disclosure have been described with respect to certain exemplary embodiments, it is to be understood that the specific embodiments are for purposes of illustration and not limitation, as other variations will occur to those of skill in the art.

## Claims

1. A thermal barrier coating (30) applied to a substrate (34) for managing the flow of heat traveling through the substrate (34), comprising:
an array (56) of metal nano-particles (60) held in a glassy matrix material (66),
wherein the matrix (66) comprises a glassy compound,
wherein the array (56) is a three dimensional array, and
wherein the metal nano-particles (60) are spaced apart from each other at distances substantially equal to the wavelength of phonons transporting thermal energy through the matrix (66).

2. The thermal barrier coating (30) of claim 1, wherein the array (56) is quasi-regular.

3. The thermal barrier coating (30) of claim 1, wherein the nano-particles (60) are spherical.

4. The thermal barrier coating (30) of claim 1, wherein the glassy matrix material (66) includes one of:
fused quartz,
soda lime glass,
boro-silicate glass,
alumino-silica glass, wherein:
the fused quartz includes amorphous SiO₂,
the soda lime glass includes SiO₂, Na₂O
CaO, Al₂O₃, MgO,
the boro-silicate glass includes B₂O₃, Na₂O
K₂O, CaO, and
the alumino-silica glass includes SiO₂, Na₂O
CaO, Al₂O₃, MgO,
the boro-silicate glass includes SiO₂, B₂O₃, Al₂O₃, Na₂O, MgO, and CaO.

5. The thermal barrier coating (30) of claim 1, wherein the spacing between the nano-particles (60) in the array (56) is constant.

6. The thermal barrier coating (30) of claim 1, wherein the molecular mass of the nano-particles (60) is greater than that of the matrix material (66).

7. The thermal barrier coating (30) of claim 7, wherein the ratio of the molecular mass of the nano-particles (60) to the mass of the matrix material (66) is greater than 10.

8. The thermal barrier coating (30) of claim 1 wherein the elastic constant of the nano-particles (60) is greater than that of the matrix material (66).

9. A method of making a thermal barrier coating (30) according to any of claims 1 to 8, comprising:
applying a glassy compound to metal nano-particles (60);
arranging the nano-particles (60) into a three dimensional array (56); and
fusing the glassy compound into a glass matrix (66) holding the nano-particles (60),
wherein the metal nano-particles (60) are spaced apart from each other at distances substantially equal to the wavelength of phonons transporting thermal energy through the matrix (66).

10. The method of claim 9, wherein applying the glassy compound performed by one of:
spraying a glassy powder onto the nano-particles, and
applying a sol-gel of a glassy powder onto the nano-particles.

11. The method of claim 9, further comprising:
arranging the nano-particles (60) into a quasi-regular 3-D array (56).

12. The method of claim 9, further comprising:
selecting the range of temperatures over which the coating (30) is designed to act as a thermal barrier, and
selecting the size of the metal nano-particles (60) based on the selected temperature range.

13. The method of claim 9, wherein fusing the glassy compound is performed by heating the glassy compound on the coated nano-particles (58) to the melting temperature of the glassy compound.

14. The method of claim 9, further comprising:
assembling the nano-particles (60) into a quasi-regular 3-D array (56).

## Patentansprüche

1. Thermalabschirmungsbeschichtung (30) beaufschlagt auf ein Substrat (34) zum Steuern des durch das Substrat (34) laufenden Wärmestroms, mit:
einer Anordnung (56) von Metallnanopartikeln (60), die in einem Glasmatrixmaterial (66) gehalten sind,
wobei die Matrix (66) eine Glaszusammensetzung aufweist,
wobei die Anordnung (56) eine dreidimensionale Anordnung ist, und
wobei die Metallnanopartikel (60) voneinander um Entfernungen beabstandet sind, die im Wesentlichen gleich der Wellenlänge von Phononen sind, die Thermalenergie durch die Matrix (66) transportieren.

2. Thermalabschirmungsbeschichtung (30) nach Anspruch 1, wobei die Anordnung (56) quasi regulär ist.

3. Thermalabschirmungsbeschichtung (30) nach Anspruch 1, wobei die Nanopartikel (60) sphärisch sind.

4. Thermalabschirmungsbeschichtung (30) nach Anspruch 1, wobei das Glasmatrixmaterial (66) eines von Folgendem aufweist:
Quarzglas,
Kalknatronglas,
Borosilikatglas,
Aluminiumquarzglas, wobei:
das Quarzglas Amorphes SiO₂ aufweist,
das Klaknatronglas SiO₂, Na₂O, CaO, Al₂O₃, MgO aufweist,
das Borosilikatglas B₂O₃, Na₂O, K₂O, CaO aufweist, und
das Aluminiumquarzglas SiO₂, Na₂O, CaO, Al₂O₃, MgO aufweist,
das Borosilikatglas SiO₂, B₂O₃, Al₂O₃, Na₂O, MgO und CaO aufweist.

5. Thermalabschirmungsbeschichtung (30) nach Anspruch 1, wobei die Beabstandung zwischen den Nanopartikeln (60) in der Anordnung (56) konstant ist.

6. Thermalabschirmungsbeschichtung (30) nach Anspruch 1, wobei die molekulare Masse der Nanopartikel (60) größer als die des Matrixmaterials (66) ist.

7. Thermalabschirmungsbeschichtung (30) nach Anspruch 7, wobei das Verhältnis der molekularen Masse der Nanopartikel (60) der Masse des Matrixmaterials (66) größer als 10 ist.

8. Thermalabschirmungsbeschichtung (30) nach Anspruch 1, wobei die elastische Konstante der Nanopartikel (60) größer als die des Matrixmaterials (66) ist.

9. Verfahren zum Herstellen einer Thermalabschirmungsbeschichtung (30) nach einem der Ansprüche 1 - 8, mit den folgenden Schritten:
Beaufschlagen einer Glaszusammensetzung auf Metallnanopartikel (60);
Anordnen der Nanopartikel (60) in einer dreidimensionalen Anordnung (56); und
Verschmelzen der Glaszusammensetzung in eine Glasmatrix (66), die die Nanopartikel (60) hält,
wobei die Metallnanopartikel (60) von einander beabstandet in Entfernungen sind, die im Wesentlichen gleich der Wellenlänge von Phononen sind, die thermale Energie durch die Matrix (66) transportieren.

10. Verfahren nach Anspruch 9, wobei das Beaufschlagen der Glaszusammensetzung durch eines von Folgendem durchgeführt wird:
Aufsprühen eines Glaspuders auf die Nanopartikel, und
Beaufschlagen eines Sol-Gels von einem Glaspuder auf die Nanopartikel.

11. Verfahren nach Anspruch 9, des Weiteren mit dem folgenden Schritt:
Anordnen der Nanopartikel (60) in einer quasi regulären 3-D Anordnung (56).

12. Verfahren nach Anspruch 9, des Weiteren mit den folgenden Schritten:
Auswählen des Temperaturbereichs bei dem die Beschichtung (30) ausgelegt ist, um als Thermalabschirmung zu wirken, und
Auswählen der größten der Metallnanopartikel (60) basierend auf dem ausgewählten Temperaturbereich.

13. Verfahren nach Anspruch 9, wobei das Verschmelzen der Glaszusammensetzung durchgeführt wird, indem die Glaszusammensetzung auf den beschichteten Nanopartikeln (58) auf die Schmelztemperatur der Glaszusammensetzung erwärmt wird.

14. Verfahren nach Anspruch 9, des Weiteren mit dem folgenden Schritt:
Zusammensetzen der Nanopartikel (60) in eine quasi reguläre 3-D Anordnung (56).

## Revendications

1. Revêtement barrière thermique (30) appliqué sur un substrat (34) pour la gestion du flux de chaleur passant à travers le substrat (34), comprenant :
un réseau (56) de nanoparticules métalliques (60) maintenues dans un matériau de matrice vitreux (66),
dans lequel la matrice (66) comprend un composé vitreux,
dans lequel le réseau (56) est un réseau tridimensionnel et
dans lequel les nanoparticules métalliques (60) sont espacées les unes des autres à des distances pratiquement égales à la longueur d'onde de phonons transportant de l'énergie thermique à travers la matrice (66).

2. Revêtement barrière thermique (30) selon la revendication 1, dans lequel le réseau (56) est quasi-régulier.

3. Revêtement barrière thermique (30) selon la revendication 1, dans lequel les nanoparticules (60) sont sphériques.

4. Revêtement barrière thermique (30) selon la revendication 1, dans lequel le matériau de matrice vitreux (66) comprend l'un de :
du quartz fondu,
du verre sodocalcique,
du verre borosilicaté,
du verre aluminosilicaté, dans lequel
le quartz fondu comprend du SiO₂ amorphe,
le verre sodocalcique comprend du SiO₂, du Na₂O, du CaO, de l'Al₂O₃, du MgO,
le verre borosilicaté comprend du B₂O₃, du Na₂O, du K₂O, du CaO et
le verre aluminosilicaté comprend du SiO₂, du Na₂O, du CaO, de l'Al₂O₃, du MgO,
le verre borosilicaté comprend du SiO₂, du B₂O₃, de l'Al₂O₃, du Na₂O, du MgO et du CaO.

5. Revêtement barrière thermique (30) selon la revendication 1, dans lequel l'espacement entre les nanoparticules (60) dans le réseau (56) est constant.

6. Revêtement barrière thermique (30) selon la revendication 1, dans lequel la masse moléculaire des nanoparticules (60) est supérieure à celle du matériau de matrice (66).

7. Revêtement barrière thermique (30) selon la revendication 7, dans lequel le rapport de la masse moléculaire des nanoparticules (60) à la masse du matériau de matrice (66) est supérieur à 10.

8. Revêtement barrière thermique (30) selon la revendication 1 dans lequel la constante élastique des nanoparticules (60) est supérieure à celle du matériau de matrice (66).

9. Procédé de fabrication d'un revêtement barrière thermique (30) selon l'une quelconque des revendications 1 à 8, comprenant :
l'application d'un composé vitreux sur des nanoparticules métalliques (60) ;
l'agencement des nanoparticules (60) en un réseau tridimensionnel (56) ; et
la fusion du composé vitreux en une matrice de verre (66) contenant les nanoparticules (60),
dans lequel les nanoparticules métalliques (60) sont espacées les unes des autres à des distances pratiquement égales à la longueur d'onde de phonons transportant de l'énergie thermique à travers la matrice (66).

10. Procédé selon la revendication 9, dans lequel l'application du composé vitreux effectuée par l'une de
la projection d'une poudre vitreuse sur les nanoparticules et
l'application d'un sol-gel d'une poudre vitreuse sur les nanoparticules.

11. Procédé selon la revendication 9, comprenant en outre :
l'agencement des nanoparticules (60) en un réseau 3D (56) quasi-régulier.

12. Procédé selon la revendication 9, comprenant en outre :
la sélection de la plage de températures sur laquelle le revêtement (30) est conçu pour servir de barrière thermique et
la sélection de la taille des nanoparticules métalliques (60) sur la base de la plage de températures sélectionnée.

13. Procédé selon la revendication 9, dans lequel la fusion du composé vitreux est effectuée par chauffage du composé vitreux sur les nanoparticules revêtues (58) à la température de fusion du composé vitreux.

14. Procédé selon la revendication 9, comprenant en outre :
l'assemblage des nanoparticules (60) en un réseau 3D (56) quasi-régulier.
